# FASCICULE DE BREVET EUROPEEN

(11) **EP 3 307 697 B1**
(45) Date de publication et mention de la délivrance du brevet: **17.02.2021**
(21) Numéro de dépôt: 16732987.9
(22) Date de dépôt: 14.06.2016
(51) Int. Cl.: C05B 13/06, C05B 13/04, C05D 9/02, A01C 23/04, C05B 7/00

(54) **PROCEDE DE MISE EN OEUVRE D'UNE COMPOSITION NUTRITIVE INORGANIQUE DE FER**
VERFAHREN ZUR VERARBEITUNG EINER ANORGANISCHEN, NAHRHAFTEN EISENZUSAMMENSETZUNG
PROCESS FOR PROCESSING AN INORGANIC, NUTRITIVE IRON COMPOSITION

(30) Priorité: 15.06.2015 BE 201505363
(43) Date de publication de la demande: 18.04.2018
(73) Titulaire: Prayon SA, 4480 Engis (BE)
(72) Inventeur: CAPPELLE, Philippe, Jacques, 4130 Esneux (BE); VERHELST, Kurt, Thierry, Oud-Turnhout 2360 (BE); DIDDEREN, Isabelle, 4608 Warsage (BE)
(74) Mandataire: Gevers Patents
(86) Numéro de dépôt international: PCT/EP2016/063639
(87) Numéro de publication internationale: WO 2016/202803

(56) Documents cités:
- WO-A1-95/28369
- WO-A1-2014/056688
- DE-A1- 2 729 417
- US-B1- 8 690 982

## Description

La présente invention se rapporte à un procédé de mise en œuvre d'une composition nutritive inorganique de fer selon la revendication 1. Il est aussi fait mention au dispositif correspondant pour la fertirrigation des végétaux.

Que ce soit pour la nutrition humaine, animale, celle des végétaux ou encore celle des microorganismes, l'assimilation de minéraux (macro- et micronutriments) est indispensable aux cycles vitaux de ces différents organismes.

En effet, on sait que les macronutriments (le carbone, l'hydrogène, l'oxygène, l'azote, le potassium, le sodium, le calcium, le magnésium, le phosphore et le soufre) doivent être présents en quantités optimales pour que les végétaux se développent de façon optimale. Les micronutriments ou oligo-éléments, présents en des concentrations moindres que celles des macronutriments dans les végétaux, sont par exemple le chlore, le fer, le bore, le manganèse, le zinc, le cuivre, le nickel et le molybdène et sont également très importants. Si l'un ou l'autre de ces micronutriments fait défaut ou est présent en une trop faible concentration, il peut en résulter des maladies de carence ayant un impact direct sur la croissance des plantes et donc sur le rendement des cultures.

De plus, pour pouvoir être absorbés et assimilés, ces éléments nutritifs doivent indispensablement être biodisponibles, c'est-à-dire pouvoir être totalement solubilisés dans une solution au départ de laquelle ces organismes peuvent les puiser et les assimiler.

Parmi ces micronutriments, le fer est celui dont la plante requiert la concentration la plus élevée (de l'ordre de 100 mg/kg de tissu sec), cet élément étant nécessaire à la synthèse de la chlorophylle qui est elle-même indispensable à la photosynthèse, laquelle est directement liée à la croissance et à la « survie » des plantes.

Toutefois, le fer est un micronutriment bien connu pour être un élément particulièrement peu solubilisable. Une des voies utilisées pour solubiliser le fer réside dans le fait de le complexer à l'aide de chélates organiques de synthèse. Cependant, ces agents chélatants sont de plus en plus controversés car ils ne sont pas biodégradables et favorisent notamment la resolubilisation des métaux lourds dans les eaux de surface.

C'est donc pour cette raison que des compositions nutritives à base de fer inorganiques ont été développées (voir par exemple les demandes de brevet internationales WO 2014/056690 et WO 2014/056688), ces compositions contiennent au moins une source de fer et un polyphosphate.

De nos jours, les horticulteurs ou agriculteurs ont de plus en plus recours à la technique de fertirrigation qui permet d'optimiser les apports d'eau et de nutriments de manière performante et écologique. Mais dans un système de fertirrigation, il est impératif que les minéraux soient entièrement solubilisés dans la solution d'irrigation pour être présents sous forme d'ions dissouts assimilables par les végétaux, les minéraux sous forme solide n'étant pas assimilables par les plantes.

Les procédés de fertirrigation actuels comprennent typiquement une formation d'une ou de plusieurs solutions mère par dissolution d'engrais solides ou par mélange / dilution d'engrais liquides, une alimentation de chacune de ces solutions mère dans l'eau d'irrigation, soit dans un bac de dilution, soit directement dans la ligne d'irrigation, pour former une solution de fertirrigation, et une alimentation d'un dispositif de fertirrigation (tel qu'un dispositif de goutte-à-goutte) au moyen d'un dispositif de transfert qui alimente le dispositif de fertirrigation en ladite solution de fertirrigation. Ce dispositif alimente alors de manière régulière les plants de végétaux cultivés en hydroponie ou sur substrats ou encore en pleine terre ou en aeroponie ou encore pour la technique du film nutritif

De tels procédés et dispositifs sont décrits dans les documents DE2729417 et US8690982 dans lesquels de l'acide phosphorique est ajouté comme nutriment.

Quand les horticulteurs décident d'opter pour les alternatives sans chélates organiques de fer et d'utiliser des compositions inorganiques nutritives à base de fer, il convient donc typiquement d'introduire cette source de fer dans une solution mère de composition choisie et d'injecter ensuite ladite solution mère dans la solution d'irrigation. Différents procédés de mise en œuvre peuvent être ainsi proposés.

On peut par exemple envisager d'injecter la composition nutritive en phase aqueuse de la demande de brevet WO2014056690, telle quelle ou diluée par de l'eau, directement dans la solution d'irrigation, la dite composition nutritive faisant alors elle-même office de solution mère. Le même type de solution mère peut être obtenu en dissolvant la composition nutritive solide de la demande WO2014056688 dans de l'eau séparément des autres engrais. Une autre possibilité consiste à introduire les compositions nutritives inorganiques à base de fer solide ou liquide dans une des solutions mère déjà utilisées pour apporter les autres éléments nutritifs dont les végétaux ont besoin.

Malheureusement, une telle mise en œuvre desdites compositions nutritives inorganiques à base de fer est source de problème chez de nombreux horticulteurs. Un phénomène de précipitation chimique apparait très souvent pendant l'étape d'alimentation de la solution mère contenant ladite source de fer dans la solution d'irrigation. La phase solide formée, qui se compose principalement de phosphate de calcium, entraine en même temps une quantité importante de fer qui est donc perdue.

Ce phénomène de précipitation provoque dès lors des carences en fer et se traduit en outre par des problèmes d'encrassement et même parfois de bouchage des dispositifs utilisés pour doser et injecter ladite solution mère dans la solution d'irrigation voire dans la solution de fertirrigation. Le phénomène de bouchage est particulièrement important dans le cas du système venturi dont les horticulteurs se servent couramment pour doser les solutions mère et où une partie de la solution d'irrigation chargée de calcium est habituellement utilisée comme liquide d'aspiration. Le bouchage du dispositif venturi peut aller jusqu'à provoquer l'arrêt complet du dosage en fer si le problème n'est pas décelé à temps, les conséquences étant alors dramatiques pour la culture.

En diagnostiquant le problème de manière approfondie, on constate aussi que le précipité une fois formé a de la peine à se resolubiliser dans la solution d'irrigation et cela même lorsque le pH de cette dernière se situe dans la plage habituellement recommandée en fertirrigation (pH 5,5 - 5,8). Le temps de séjour de ladite solution dans le bac de mélange (quand il existe) est de ce fait insuffisant pour résorber ledit précipité. Les tanks de stockage éventuels de la solution d'irrigation et la ligne d'irrigation en aval dudit bac de mélange sont en outre insuffisamment agités pour que la solubilisation du précipité puisse s'y poursuivre.

Ce problème de précipitation est clairement lié au pH basique des solutions mères que l'on obtient naturellement au départ desdites compositions nutritives inorganiques à base de fer. Comme l'indique la revendication 12 de la demande de brevet WO 2014/056690, la plage de pH préférée de la composition nutritive en phase aqueuse s'étend de 7 à 10,8, où la stabilité au stockage de la solution est optimale.

D'autre part, comme le montrent les exemples 1 et 2 de la demande de brevet WO 2014/056688, la composition nutritive solide fournit aussi des pH typiquement basiques après sa mise en solution dans l'eau. Il est possible d'abaisser le pH desdites solutions mère en y ajoutant une certaine quantité d'acide, mais à ce jour il n'est pas évident de savoir s'il existe une plage de pH pour lesdites solutions mère permettant d'éviter le problème de précipitation décrit plus haut sans créer d'autres difficultés.

En abaissant le pH de la solution mère contenant ladite source de fer, on tend en effet à réduire sa stabilité au stockage et cela pour deux raisons différentes.

Tout d'abord, la réaction de protonation que les polyphosphates subissent quand on abaisse le pH de la solution réduit généralement leur pouvoir complexant vis-à-vis des cations métalliques comme le fer.

D'autre part, il est aussi bien connu que la baisse de pH augmente la vitesse d'hydrolyse des polyphosphates dont la disparition entraine une précipitation du fer. Or, les solutions mère en question doivent pouvoir être conservées plusieurs semaines sans subir de précipitation à une température de stockage pouvant aller jusqu'à 40°C dans les serres des horticulteurs, sachant que cette haute température accélère encore l'hydrolyse des polyphosphates.

Les données de stabilité chimiques dont nous disposons pour les solutions d'irrigation ne peuvent pas s'extrapoler au cas des solutions mère qui sont typiquement 100 à 10.000 fois plus concentrées et dont les temps de stockage sont bien plus longs que ceux des solutions d'irrigation dont le temps de consommation dépasse rarement 1 ou 2 jours.

L'invention a pour but de pallier à ces inconvénients de l'état de la technique en procurant un procédé de mise en œuvre optimal de fer et d'au moins un polyphosphate dans les dispositifs de fertirrigation.

Pour résoudre ce problème, il est prévu suivant l'invention un procédé de fertirrigation de végétaux comprenant
- une mise à disposition d'une série de solutions mère comprenant une solution ère comprenant du fer et au moins un polyphosphate, à pH basique ou à pH compris entre 4,5 et 6,2, avantageusement supérieur ou égal à 5,0 et inférieure ou égal à 6,0, de préférence un pH supérieure ou égal à 5,5, formée par addition de fer et d'au moins un polyphosphate à une phase aqueuse,
- une alimentation de chacune des solutions mère dans un système de dilution, pour former une solution de fertirrigation,
- une alimentation d'un dispositif de fertirrigation au moyen d'un dispositif de transfert, alimentant ledit dispositif de fertirrigation en ladite solution de fertirrigation.
- avec la condition que si ladite solution mère est à pH basique, une quantité suffisante d'acide est ajoutée dans ledit système de dilution avant alimentation de ladite solution mère, et des conditions de mélange suffisamment intensives en un point d'alimentation de ladite solution mère dans ledit système de dilution sont assurés de manière à ce que ladite solution de fertirrigation possède un pH au-dessous de 6,2.

En étudiant la stabilité desdites solutions en fonction de leur pH, puis en testant le nouveau procédé de mise en œuvre suivant l'invention dans toutes sortes de configurations y compris les dispositifs venturi

fonctionnant avec un recyclage de la solution d'irrigation, il a été montré de manière surprenante que la plage de pH susmentionnée permet d'éviter le problème de précipitation que l'on rencontrait en alimentant une ou plusieurs solutions mère dans la solution d'irrigation tout en conservant une stabilité au stockage suffisante de la série de solutions mère elle-même.

En outre, la dite plage de pH est suffisamment large pour assurer la robustesse du procédé de mise en œuvre selon la présente invention malgré les nombreux paramètres qui sont capables d'influencer le pH de la série de solutions mère ou de la solution de fertirrigation et perturber leur ajustement: les concentrations dans la série de solutions mère, de la solution de fertirrigation, l'effet tampon éventuels des autres constituants et les différentes erreurs de dosage qui peuvent se produire, notamment au niveau de l'acide ajouté ou laissé en excès pour abaisser le pH de la solution. Ces erreurs peuvent être particulièrement importantes dans le cas des engrais liquides où il s'agit souvent de neutraliser des solutions basiques par d'autres solutions acides et où un petit excès de l'une ou l'autre solution peut créer des écarts de pH importants.

En effet, selon la présente invention, la plage de pH susmentionnée dans la solution mère dans laquelle le fer et ledit au moins un polyphosphate sont alimentés permet d'éviter le problème de précipitation que l'on rencontrait en alimentant la solution mère dans la solution d'irrigation tout en conservant une stabilité au stockage suffisante de la solution

Dans une variante du procédé selon la présente invention, bien que selon ce qui est mentionné ci-dessus, le problème de précipitation décrit plus haut tend à exclure tout autre procédé de mise en œuvre qui alimenterait une solution mère basique comprenant du fer, il est également prévu que ladite au moins une solution de fer et d'au moins un polyphosphate à pH compris entre 4,5 et 6,2, avantageusement supérieur ou égal à 5,0 et inférieur ou égal à 6,0, de préférence un pH supérieur ou égal à 5,5, est une une solution de fer et d'au moins un polyphosphate à pH compris entre 4,5 et 6,2, avantageusement supérieur ou égal à 5,0 et inférieur ou égal à 6,0, de préférence un pH supérieur ou égal à 5,5, de préférence inférieur ou égal à 5,8 et est la solution de fertirrigation.

En effet, le moindre dépassement de pH au-dessus de 6,2 même localisé au point d'alimentation de ladite solution mère dans la solution d'irrigation semble suffire pour engendrer le problème vu la persistance du précipité une fois formé.

Toutefois, de manière surprenante, il a été montré dans la variante du procédé selon la présente invention, que le phénomène de précipitation en question peut être malgré tout évité, par exemple en assurant une dispersion suffisamment rapide de ladite solution mère basique comprenant du fer au point d'alimentation et en dosant une quantité d'acide suffisante en amont du point d'alimentation de manière à ce que le mélange résultant soit au-dessous de pH 6,2, de préférence inférieur à pH 6,0 et préférentiellement au-dessous de pH 5,8.

Une turbine de dispersion ou tout autre appareil de mélange intensif qu'il soit statique ou dynamique peut être mis en place dans le bac de mélange ou dans la ligne d'irrigation en vue de créer l'effet de dispersion nécessaire au point d'alimentation. Un autre mode de réalisation de ce procédé de mise en œuvre alternatif consiste à choisir un point d'alimentation dans le bac de mélange présentant des conditions de mélange suffisamment intensives.

L'adéquation des conditions de mélange au point d'alimentation peut se vérifier en mesurant la teneur en fer solubilisé suivant la méthode d'analyse décrite dans les demandes de brevet mentionnées plus haut.

La présente invention procure donc également un procédé de mise en œuvre des solutions mères basiques comprenant du fer et au moins un polyphosphate qui ne nécessite pas d'amener lesdites solutions mères dans la plage de pH revendiquée plus haut.

De préférence, dans le procédé selon la présente invention, ladite addition de fer et d'au moins un polyphosphate est mise en œuvre par alimentation séparément ou ensemble, d'une source de fer et d'une source d'au moins un polyphosphate, chaque source étant, indépendamment l'une de l'autre, sous forme de solide, de solution ou encore de suspension.

Dans une autre forme de réalisation préférentielle de la présente invention, ladite addition de fer et d'au moins un polyphosphate est mise en œuvre par alimentation d'une composition contenant du fer et au moins un polyphosphate, sous forme solide, de solution ou encore de suspension.

Dans une variante du procédé selon la présente invention, ladite au moins une addition de fer et d'au moins un polyphosphate à une phase aqueuse avec une formation d'au moins une solution de fer et d'au moins un polyphosphate à pH compris entre 4,5 et 6,2, avantageusement supérieur ou égal à 5,0 et inférieur ou égal à 6,0, de préférence un pH supérieur ou égal à 5,5 est une addition d'une pré-solution de fer et d'au moins un polyphosphate à une solution mère, laquelle forme la solution de fer et d'au moins un polyphosphate à un pH compris entre 4,5 et 6,2, avantageusement supérieur ou égal à 5,0 et inférieur ou égal à 6,0, de préférence un pH supérieur ou égal à 5,5.

Dans une autre variante du procédé selon la présente invention, ladite au moins une solution de fer et d'au moins un polyphosphate à pH compris entre 4,5 et 6,2, avantageusement supérieur ou égal à 5,0 et inférieur ou égal à 6,0, de préférence un pH supérieur ou égal à 5,5 est une solution de fer et d'au moins un polyphosphate à pH compris entre 4,5 et 6,2, avantageusement supérieur ou égal à 5,0 et inférieur ou égal à 6,0, de préférence un pH supérieur ou égal à 5,5 ajoutée à au moins une solution mère de ladite série de solutions mère.

Avantageusement, dans le procédé selon la présente invention, ladite au moins une solution mère de ladite série de solutions mère contenant le fer et au moins un polyphosphate contient également des ions choisis dans le groupe constitué des sulfates, des phosphates de tout type, des nitrates, des chlorures, du potassium, de l'ammonium, du sodium et de leurs mélanges.

Selon un mode préféré de la présente invention, ladite au moins une solution mère de ladite série de solutions mère contenant le fer et au moins un polyphosphate, ne contient pas d'ion magnésium.

Selon encore un autre mode de réalisation, le fer et ledit au moins un polyphosphate sont ajoutés à une phase aqueuse pour former une pré-solution mère comprenant du fer et au moins un polyphosphate, ladite pré-solution mère comprenant le fer et au moins un polyphoshate étant alors ajoutée à une autre phase aqueuse pour former ladite au moins une solution de fer et d'au moins un polyphosphate à pH compris entre 4,5 et 6,2, avantageusement supérieur ou égal à 5,0 et inférieur ou égal à 6,0, de préférence un pH supérieur ou égal à 5,5.

Plus particulièrement encore, dans le procédé selon la présente invention, ladite au moins une solution mère de ladite série de solutions mère ou ladite pré-solution mère contenant le fer et au moins un polyphosphate, contient des micronutriments sélectionnés dans le groupe constitué du bore, manganèse, du zinc, du cuivre, du molybdène, du cobalt et de leurs mélanges , de préférence selon un ratio atomique par rapport au Fe entre 0,1 et 5 pour le B, 0,05 et 2,5 pour le Mn, 0,01 et 1 pour le Zn, 0,005 et 0,25 pour le Cu et le Mo et entre 0,001 et 0,1 pour le Co.

Avantageusement, dans le procédé de fertirrigation de végétaux selon la présente invention, le pH de ladite solution mère ou d'une des dites solutions mère ou de ladite pré-solution mère ou de la solution de fertirrigation contenant le fer et au moins un polyphosphate est ajusté par addition d'un acide choisi dans le groupe constitué des acides minéraux, comme par exemple, l'acide nitrique, l'acide sulfurique, l'acide phosphorique et leurs mélanges.

Avantageusement, ladite solution de fertirrigation a une concentration molaire, exprimée en millimole/L (mM) en phosphore (P) comprise entre 0,05 et 5 mM, préférentiellement entre 0,5 et 3 mM, de manière avantageuse entre 1 et 2 mM.

Le procédé selon la présente invention, comprend, selon un mode préféré, une oxydation de ladite au moins une solution de fer et d'au moins un polyphosphate et/ou de ladite pré-solution mère contenant du fer et au moins un polyphosphate.

A titre d'exemple, les traitements d'oxydation couramment utilisés sont : le barbotage d'air à l'aide d'un disperseur situé en bas de la cuve (l'air pouvant provenir d'un compresseur ou d'une simple pompe), l'agitation à la surface du liquide sous air, une addition d'oxydants tels que l'oxygène, l'air, l'eau oxygénée, l'eau de. javel.

La durée du traitement d'oxydation varie entre quelques heures et plusieurs jours selon la taille de la cuve et le système d'aération utilisé.

Dans encore une variante avantageuse du procédé selon l'invention, le fer et ledit au moins un polyphosphate sont ajoutés selon un ratio P_{poly}/Fe compris entre 5 et 50, de préférence entre 8 et 32, où Fe représente le nombre de moles total de fer et où P_{poly} représente le nombre de moles de phosphore sous forme de polyphosphate.

Plus particulièrement, dans le procédé selon la présente invention, ledit au moins un polyphosphate comprend du tripolyphosphate de potassium, et/ou du tétrapotassium pyrophosphate, et/ou du potassium tripolyphosphate, et/ou du sodium tripolyphosphate, et/ou du pyrophosphate de sodium acide, et/ou du tétrasodium pyrophosphate, et/ ou du pyrophosphate d'ammonium, et/ou du polyphosphate d'ammonium, ou leur mélanges

Plus particulièrement, dans ladite solution de fer et au moins un polyphosphate, le ratio molaire P ortho/P total, avec P ortho le nombre de moles de P sous forme ortho et P tot le nombre de moles totale de P, compris entre 0 et 0,95, de préférence 0 à 0,3.

Dans un mode de réalisation particulièrement préféré, chaque étape d'alimentation de chacune des solutions mère dans le système de dilution est une étape de transfert par entraînement venturi de ladite solution mère au moyen d'un flux de solution de fertirrigation dérivé au refoulement dudit dispositif de transfert qui permet d'alimenter le dispositif de fertirrigation dans lequel le pH de la solution de fertirrigation est inférieur à 6,2.

Avantageusement, et plus particulièrement lorsque le fer et ledit au moins un polyphosphate sont ajoutés dans la solution de fertirrigation, ladite solution de fertirrigation est à un pH inférieur à 6,0 et de préférence inférieur à 5,8.

De préférence, dans ce cas, le fer et ledit au moins un polyphosphate sont ajoutés dans ladite solution de fertirrigation à un point d'alimentation présentant des conditions de mélange suffisamment intenses en vue d'éviter toute précipitation.

Avantageusement, lesdites solutions mère comprenant du fer et au moins un polyphosphate présentent une concentration en fer de 0,15 mM à 500 mM.

De manière avantageuse, lesdites solutions mère comprenant du fer et au moins un polyphosphate ont pour constituant une composition inorganique solide contenant du fer et au moins un polyphosphate dissout dans de l'eau ou dans une solution aqueuse (solution de fertirrigation ou solution de drainage) ou une composition inorganique liquide comprenant du fer et au moins un polyphosphate.

De manière avantageuse, les dites pré-solutions mèrecomprenant du fer et au moins un polyphosphate ont pour constituant une composition inorganique solide contenant du fer et au moins un polyphosphate dissout dans une desdites pré-solutions mère ou une composition inorganique liquide comprenant du fer et au moins un polyphosphate.

De manière préférentielle, ladite au moins une source de fer est choisie dans le groupe constitué de Fe2(SO4)3.xH2O où x représente un coefficient molaire compris entre 0 et 9, MFe(SO4)2.12H2O où M représente Na ou K, Fe(NO3)3.xH2O où x représente un coefficient molaire compris entre 0 et 9, FeCl3.xH2O où x représente un coefficient molaire compris entre 0 et 6, Fe4(P2O7)3, FePO4.xH2O où x représente un coefficient molaire compris entre 0 et 4, FeSO4.xH2O où x représente un coefficient molaire compris entre 0 et 7, FeCl2.xH2O où x représente un coefficient molaire compris entre 0 et 4, FeO.xH2O où x représente un coefficient molaire compris entre 0 et 1, Fe(NH4)PO4.H2O, oxysulfate de fer et leurs mélanges.

De manière avantageuse, l'eau d'alimentation, les solutions mère ou pré-solutions mère ou les solutions de fertirrigation peuvent être filtrées par tout moyen ou dispositif couramment utilisé tel que, par exemple, des filtres à sables, ...

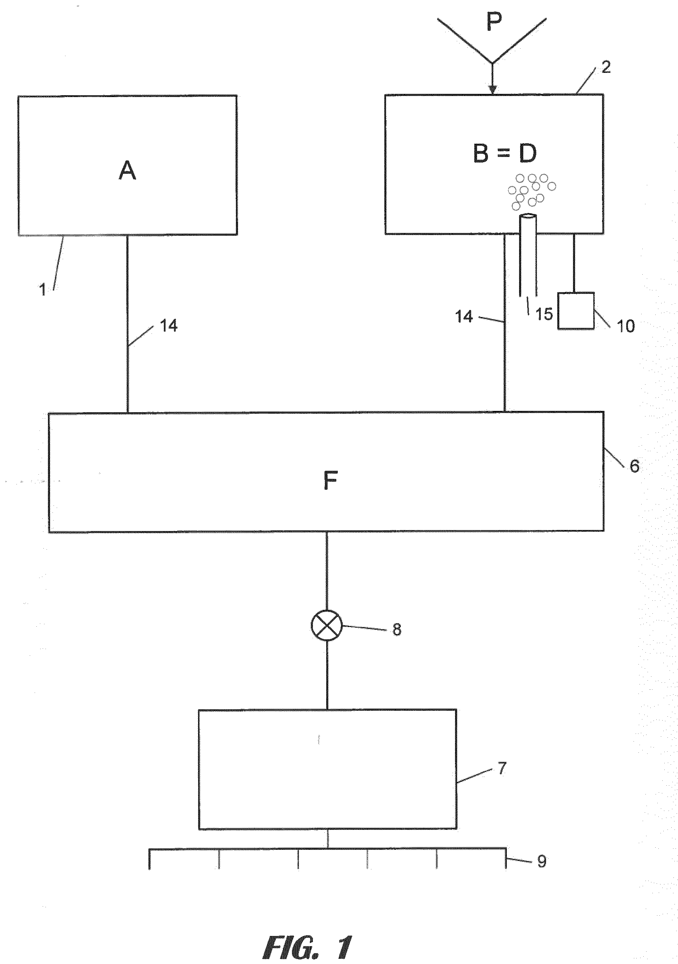

D'autres formes de réalisation du procédé suivant l'invention sont indiquées dans les revendications annexées.
Dans les dessins, la figure 1 représente schématiquement une forme de réalisation du premier mode du procédé selon la présente invention.
La figure 2 représente schématiquement une forme de réalisation du second mode de réalisation du procédé selon la présente invention.
La figure 3 représente schématiquement une forme de réalisation du troisième mode de réalisation du procédé selon la présente invention.
La figure 4 représente schématiquement une forme de réalisation du quatrième mode de réalisation du procédé selon la présente invention.
La figure 5 représente schématiquement une forme de réalisation du cinquième mode de réalisation du procédé selon la présente invention.

Sur les figures, les éléments identiques ou analogues portent les mêmes références.

Le procédé de fertirrigation de végétaux selon la présente invention comprend
- une mise à disposition d'une série de solutions mère A, B... dans une série de cuves de solutions mère 1, 2,...,
- une alimentation de chacune des solutions mère (A,B,...) dans un système de dilution 6, pour former une solution de fertirrigation F
- une alimentation d'un dispositif de fertirrigation 7 au moyen d'un dispositif de transfert 8, alimentant ledit dispositif de fertirrigation 7 en ladite solution de fertirrigation F.
- une addition de fer et d'au moins un polyphosphate à une phase aqueuse avec une formation d'au moins une solution D de fer et d'au moins un polyphosphate à pH compris entre 4,5 et 6,2, avantageusement supérieur ou égal à 5,0 et inférieur ou égal à 6,0, de préférence un pH supérieur ou égal à 5,5.

Dans un mode préféré de l'invention, le procédé permet d'atteindre un rendement en fer à la sortie des tubulures 9 du système de fertirrigation 7 de plus de 85%, préférentiellement de plus de 90%. Le rendement en fer étant défini comme la concentration en fer soluble mesurée à la sortie des tubulures 9 du système de fertirrigation 7 (ou juste avant la mise en contact de la solution de fertirrigation avec le/les substrats et la/les plante(s)) par rapport à la concentration en fer théorique en ce point. La concentration en fer théorique est calculée sur base de la concentration en fer initiale (solution mère ou pré-solution mère) et au facteur de dilution de l'étape de préparation de la solution de fertirrigation F.

Dans un premier mode de réalisation du procédé selon l'invention illustré à la figure 1, ladite série de solutions mère comprend une première solution mère A dans une première cuve de solution mère 1 et une deuxième solution mère B dans une deuxième cuve de solution mère 2, ladite première solution mère A comprenant les nutriments calciques, de préférence sous forme de nitrate ou de chlorure et les nutriments magnésiens, de préférence sous forme de nitrate, ladite deuxième solution mère B comprenant les anions sulfates et phosphates, et leurs mélanges ainsi que du fer et au moins un polyphosphate alimenté par exemple par une trémie P sous forme solide. La deuxième solution mère B est ladite solution D de fer et d'au moins un polyphosphate présentant le pH compris entre 4,5 et 6,2, avantageusement supérieur ou égal à 5,0 et inférieur ou égal à 6,0, de préférence supérieur à 5,5 par ajustement de celui-ci par les moyens d'ajustement 10 du pH reliés à ladite deuxième cuve 2 à l'aide d'acide.

Bien entendu, en fonction des installations de fertirrigation présentes chez les horticulteurs ou les agriculteurs et des possibilités d'adaptation de celles-ci, le procédé selon l'invention se décline selon différents modes de réalisation. Le premier mentionné ci-dessus vise en fait à adapter le procédé conventionnel en introduisant les nutriments calciques et magnésiens dans la première cuve, les autres nutriments étant alors introduits dans la deuxième cuve, en ce compris du fer et au moins un polyphosphate.

Dans ce mode de réalisation, les seuls ions avec lesquels la composition nutritive inorganique comprenant du fer et au moins un polyphosphate n'est pas compatible sont le calcium et le magnésium. Ces derniers sont isolés dans la première solution mère A dans la première cuve de solution mère 1 tandis que la composition nutritive inorganique est mise en œuvre dans la deuxième solution mère B dans la deuxième cuve de solution mère 2, par exemple avec du phosphate monopotassique (MKP), du nitrate de potassium (KNO₃) ou du sulfate de potassium (K₂SO₄). Toutefois, le magnésium, que l'on trouve souvent sous forme de sulfate dans la deuxième solution mère B dans les procédés conventionnels est maintenant apporté sous forme de nitrate dans la première solution mère A.

Le pH de la deuxième solution mère B doit être supérieur à 4,5 et de préférence supérieur à 5,0 et de manière avantageuse supérieure à 5,5 pour garantir la stabilité du fer pendant son temps de stockage. D'autre part, si le pH de cette deuxième solution mère ne dépasse pas 6,2, tout risque de précipitation dans l'étape de dilution est écarté comme expliqué plus haut.

Les autres oligo-éléments ou micronutriments (B, Mn, Zn, Mo, Co, Cu et leurs mélanges) peuvent être introduits aussi bien dans la première solution mère A que dans la deuxième solution mère B, toutefois, au vu des conditions de pH imposées dans la deuxième solution mère B, on préfèrera les introduire dans la première solution mère A.

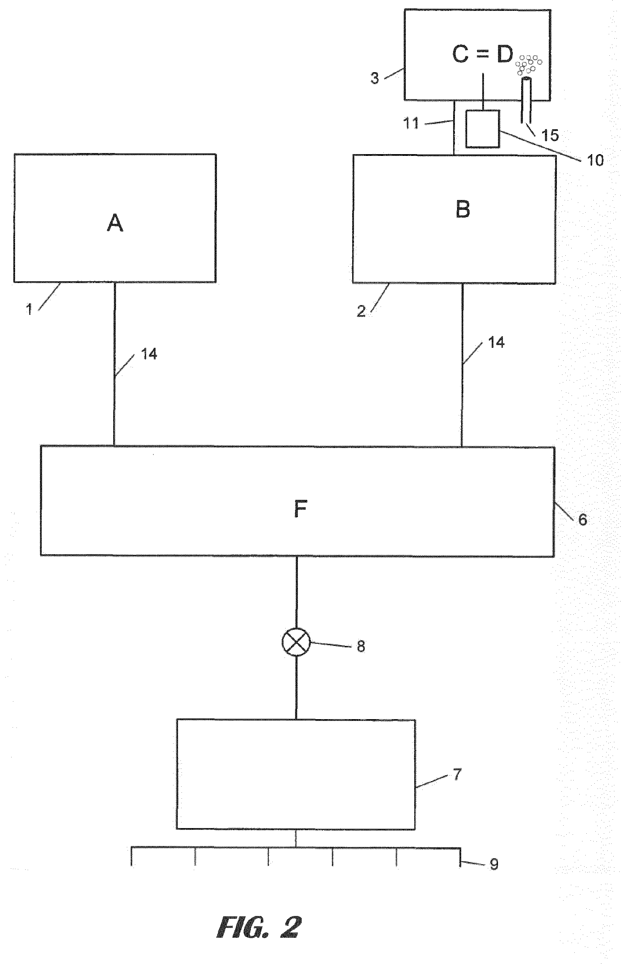

Dans un deuxième mode de réalisation selon la présente invention illustré à la figure 2, ladite série de solutions mère comprend une première solution mère A contenue dans une première cuve de solution mère 1 et une deuxième solution mère B contenue dans une deuxième cuve de solution mère 2. La première solution mère A comprend les nutriments calciques, de préférence sous forme de nitrate ou de chlorure et les nutriments magnésiens, de préférence sous forme de nitrate. La deuxième solution mère B comprend les anions sulfates et phosphates et leurs mélanges ainsi que du fer et au moins un polyphosphate. Le fer et ledit au moins un polyphosphate sont alimentés à partir d'une pré-solution mère C contenue dans une cuve de présolution mère 3 à ladite deuxième solution mère B dans la deuxième cuve de solution mère 2 au moyen d'une tubulure de transfert 11 reliée d'une part à la cuve de pré-solution 3 et d'autre part à la deuxième cuve de solution mère 2. Des moyens d'ajustement 10 du pH sont reliés directement à la cuve de présolution mère 3. La pré-solution mère C présente une acidité suffisante pour assurer un pH compris entre 4,5 et 6,2, avantageusement supérieur ou égal à 5,0 et inférieur ou égal à 6,0, de préférence supérieur à 5,5 dans la dite deuxième solution mère B.

Dans ce mode particulier de réalisation du procédé selon la présente invention, une pré-solution mère C comprenant du fer et au moins un polyphosphate est fournie afin d'être transférée ultérieurement dans la deuxième solution mère B sous forme de solution. Dans ce cas, on ajustera directement le pH de la pré-solution mère C à l'aide d'une addition d'acide de telle sorte que le pH de la dite deuxième solution mère B présente un pH entre 4,5 et 6,2, plus particulièrement entre 5,0 et 6,0, de préférence supérieur à 5,5. Ceci peut être réalisé de différentes manières, comme par exemple par un ajustement du pH de la pré-solution mère C à un pH prédéterminé par les moyens d'ajustement 10 du pH de telle façon que le pH dans la deuxième solution mère B soit dans la plage requise 4,5 et 6,2, plus particulièrement entre 5,0 et 6,0, de préférence supérieur à 5,5. Dans ce cas, la deuxième solution mère B est la solution de fer et d'au moins un polyphosphate au pH dans la plage requise susdite (B=D). Une autre manière réside dans le fait d'ajuster le pH également dans la deuxième solution mère B, auquel cas la deuxième cuve 2 est également reliée à des moyens d'ajustement 10 de pH (non illustré), ou encore en veillant que la deuxième solution mère B présente un pH entre 4,5 et 6,2, plus particulièrement entre 5,0 et 6,0, de préférence supérieur à 5,5, ainsi que la pré-solution mère C. Dans ce dernier cas, la pré-solution mère C est la solution D (C=D) contenant le fer et au moins un polyphosphate à un pH entre 4,5 et 6,2, plus particulièrement entre 5,0 et 6,0, de préférence supérieur à 5,5, mais également la deuxième solution mère B (B=D).

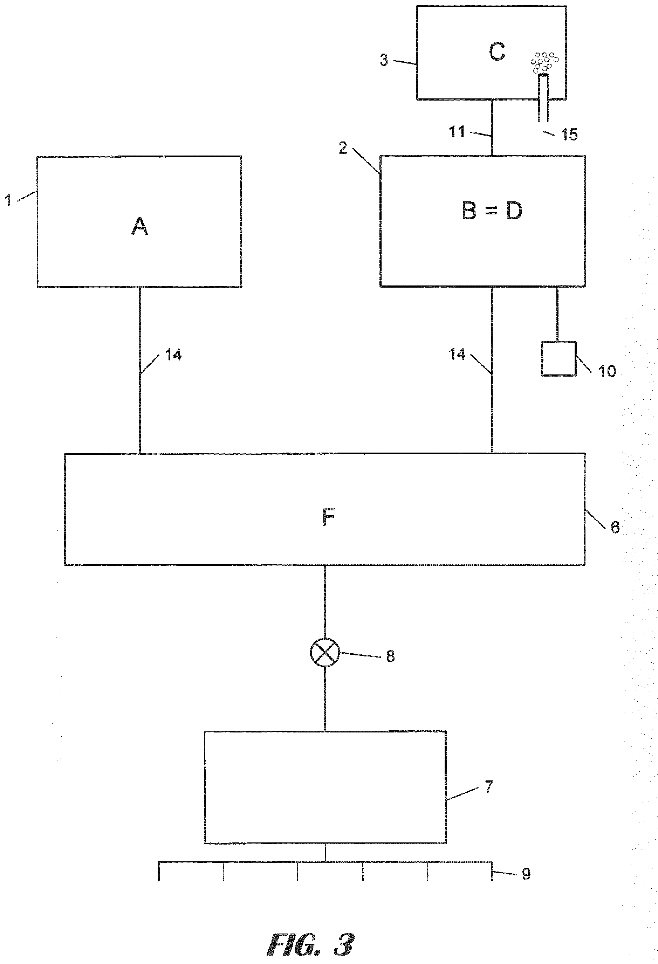

Dans un troisième mode de réalisation particulier du procédé selon la présente invention illustré à la figure 3, ladite série de solutions mère comprend une première solution mère A dans une première cuve de solution mère 1 et une deuxième solution mère B dans une deuxième cuve de solution mère 2, ladite première solution mère A de la première cuve de solution mère 1 comprenant les nutriments calciques, de préférence sous forme de nitrate ou de chlorure et les nutriments magnésiens, de préférence sous forme de nitrate, ladite deuxième solution mère B de la deuxième cuve de solution mère comprenant les anions sulfates et phosphates et leurs mélanges ainsi que du fer et au moins un polyphosphate. Le fer et ledit au moins un polyphosphate sont alimentés à partir d'une pré-solution mère C contenue dans une cuve de pré-solution 3 à ladite deuxième solution mère B au moyen d'une tubulure de transfert 11 reliée d'une part à la cuve de pré-solution 3 et d'autre part à la deuxième cuve de solution mère 2. Les moyens d'ajustement 10 du pH sont reliés à la deuxième cuve de solution mère 2. La deuxième solution mère B est alors ladite solution D (B=D) de fer et d'au moins un polyphosphate présentant le pH compris entre 4,5 et 6,2, avantageusement supérieur ou égal à 5,0 et inférieur ou égal à 6,0, de préférence supérieur à 5,5, par ajustement de celui-ci à l'aide d'acide.

Dans ce mode particulier de réalisation du procédé selon la présente invention, une pré-solution mère C comprenant du fer et au moins un polyphosphate est fournie afin d'être transférée ultérieurement dans la deuxième solution mère B sous forme de solution. Dans ce cas, on ajustera directement le pH de la deuxième solution mère B, dans laquelle la pré-solution est ajoutée, à une valeur entre 4,5 et 6,2, avantageusement supérieur ou égal à 5,0 et inférieur ou égal à 6,0, plus particulièrement supérieur à 5,5 à l'aide d'une addition d'acide.

Avantageusement, dans les deuxième et troisième modes de réalisation, la pré-solution mère C comprend du fer et au moins un polyphosphate et présente un ratio P_{poly}/Fe compris entre 5 et 50 et de préférence entre 8 et 32, où Fe représente le nombre de moles total de fer et où P_{poly} représente le nombre de moles de phosphore sous forme de polyphosphate.

De manière préférentielle, dans les deuxième et troisième modes de réalisation, la pré-solution mère C est formée à partir d'une composition inorganique nutritive à base de fer et d'au moins un polyphosphate solide ou liquide.

Préférentiellement, dans les deuxième et troisième modes de réalisation, la pré-solution mère C est formée à partir d'une source de fer et d'au moins un polyphosphate solide ou liquide ajoutée de manière indépendante ou non.

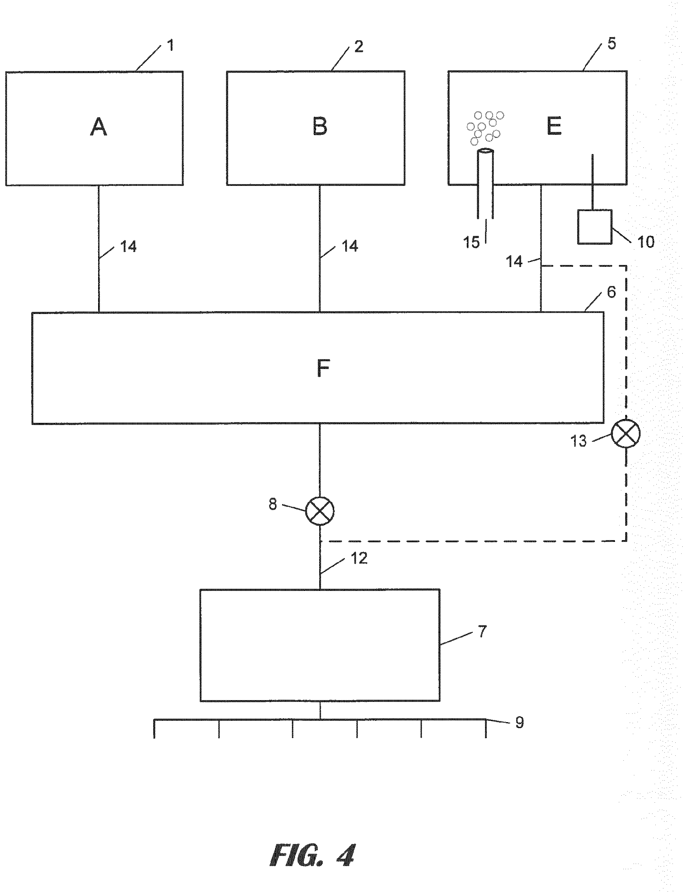

Dans un quatrième mode de réalisation préféré du procédé selon la présente invention illustré à la figure 4, ladite série de solutions mère comprend une première solution mère A dans une première cuve de solution mère 1, une deuxième solution mère B dans une deuxième cuve de solution mère 2 et une troisième solution mère E dans une troisième cuve de solution mère 5. La première solution mère A comprend les nutriments calciques, de préférence sous forme de nitrate ou de chlorure, la deuxième solution mère B comprend des anions sulfates et phosphates ou leurs mélanges et ladite troisième solution mère E comprend du fer et au moins un polyphosphate ; les nutriments magnésiens pouvant être alimentés dans ladite première solution mère A ou dans ladite deuxième solution mère B; ladite troisième solution mère E étant ladite solution D (E = D) de fer et d'au moins un polyphosphate présentant le pH compris entre 4,5 et 6,2, avantageusement supérieur ou égal à 5,0 et inférieur ou égal à 6,0, de préférence supérieur à 5,5 par ajustement de celui-ci à l'aide d'acide.

Dans ce mode de réalisation, une troisième solution mère E comprenant du fer et au moins un polyphosphate est formée séparément (comme par exemple dans une troisième cuve de solution mère 5 ou à partir de pré-solutions mère (non illustrée) alimentée dans la troisième cuve de solution mère 5). Elle est alors alimentée, non plus dans la deuxième solution mère B, mais directement dans la solution de fertirrigation F, dans le bac de dilution 6 ou dans la ligne d'irrigation 12, à l'aide par exemple de son propre dispositif de transfert 13. Toutefois, dans ce mode de réalisation, le pH sera ajusté à une valeur entre 4,5 et 6,2, avantageusement supérieur ou égal à 5,0 et inférieur ou égal à 6,0, de préférence supérieur à 5,5 par les moyens d'ajustement 10 du pH reliés à la troisième cuve 5, en particulier par addition d'acide au niveau de la troisième solution mère E. Bien que ce mode de réalisation exige deux appareils supplémentaires en termes d'équipement, une cuve 5 de préparation d'une troisième solution mère E et un système additionnel de dosage 13 ou 14 de cette solution dans le bac de dilution 6 ou dansla ligne d'irrigation 8, elle est toutefois moins contraignante d'un point de vue chimique. Notamment les nutriments magnésiens peuvent être apportés sous forme de sulfates ou de nitrates dans ladite deuxième solution mère B.

Les différentes solutions mère ou les pré-solutions mère des modes de réalisation susdits sont transférés d'une cuve à l'autre au moyen de tout système de transfert conventionnel (11, 14, 8, 13) de solution tel que pompes, venturi, gravité, ....

Dans un mode avantageux de l'invention, chaque étape d'alimentation de chacune des solutions mère (A, B, E) des modes de réalisation susdits, dans un bac de dilution 6 ou dans une ligne d'irrigation 12 est une étape de transfert par entraînement venturi de ladite solution mère au moyen d'un flux de solution de fertirrigation dérivé au refoulement dudit dispositif de transfert 8 qui permet d'alimenter le dispositif de fertirrigation 7 (non illustré).

Toutes les étapes du procédé, quel que soit le mode de réalisation envisagé, sont réalisées à température ambiante c'est-à-dire sans un contrôle strict de température dans les cuves des dites solutions mère ou des dites pré-solutions mère c'est-à-dire à des températures fluctuant entre 10 et 40°C selon que l'installation de préparation soit installée à l'air libre ou sous serre.

De manière avantageuse, dans la présente invention, par exemple dans les modes de réalisation 1, 2, 3 ou 4, une oxydation des solutions mère ou pré-solutions mère peut être envisagée par des moyens d'oxydation 15, notamment pour éviter la précipitation ou la co-précipitation de certains micronutriments tels que le cuivre. En effet, en l'absence d'oxydation, des micro-nutriments tels que le cuivre peuvent précipiter avec le fer et d'autres ions comme les pyrophosphates. Les techniques classiques d'oxydation peuvent être mises en oeuvre avec des agents oxydants connus tels que l'oxygène, l'air, l'eau oxygénée, l'eau de javel....

A titre d'exemple, les traitements d'oxydation couramment utilisés sont : le barbotage d'air à l'aide d'un disperseur situé en bas de la cuve (l'air pouvant provenir d'un compresseur ou d'une simple pompe), l'agitation à la surface du liquide sous air, ....

La durée du traitement d'oxydation varie entre quelques heures et plusieurs jours selon la taille de la cuve et le système d'aération utilisé.

De manière avantageuse, quel que soit le mode de réalisation 1, 2, 3 ou 4, un second moyen d'ajustement 10 de pH peut être présent dans le bac de dilution 6 (non illustré).

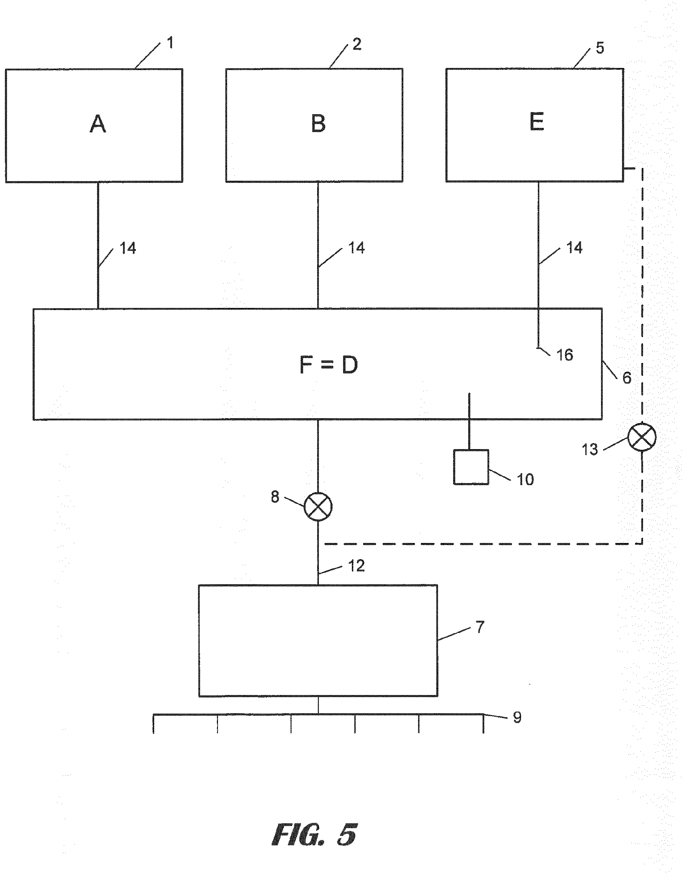

Dans un cinquième mode de réalisation du procédé selon la présente invention illustré à la figure 5, ladite série de solutions mère comprend une première solution mère A contenue dans une première cuve de solution mère 1, une deuxième solution mère B contenue dans une deuxième cuve de solution mère 2 et une troisième solution mère E contenue dans une troisième cuve de solution mère 5. La première solution mère A comprend les nutriments calciques, de préférence sous forme de nitrate ou de chlorure, la deuxième solution mère B comprend les anions sulfates et phosphates et ladite troisième solution mère E comprenant du fer et au moins un polyphosphate ; les nutriments magnésiens pouvant être alimentés dans ladite première A ou dans ladite deuxième solution mère B; les conditions de mélange étant suffisamment intensives au point d'alimentation de ladite troisième solution mère E dans la dite solution de fertirrigation F de manière à empêcher toute précipitation de phosphate de calcium ; ladite solution de fertirrigation F étant à un pH inférieur à 6,2, de préférence inférieur à 6,0 et préférentiellement inférieur à 5,8 après ladite alimentation de la troisième solution mère E.

Dans ce mode de réalisation, une solution mère E comprenant du fer et au moins un polyphosphate est formée séparément. Celle-ci peut présenter un pH basique et est alimentée directement dans la solution de fertirrigation F, dans le système de dilution 6 ou dans la ligne d'irrigation12 auquel sont reliés les moyens d'ajustement 10 du pH (lesquelles comprennent aussi dans cette forme de réalisation particulière les moyens qui permettent d'assurer les conditions de mélange suffisamment intensives au point d'alimentation 16 de ladite troisième solution mère E dans la dite solution de fertirrigation F). Avantageusement, dans la cinquième forme de réalisation, les conditions de mélange peuvent être assurées par tout moyen d'agitation conventionnel au point d'injection de ladite troisième solution mère E tels que les agitateurs, les recyclages, les bullages de gaz, ....

Toutefois, dans ce mode de réalisation, la quantité suffisante d'acide sera ajoutée avant alimentation de ladite troisième solution E dans le dispositif de dilution (bac de dilution 6 ou ligne d'irrigation 12).

Dans ce mode de réalisation particulier , la solution de fertirrigation F est la solution D de fer et d'au moins un polyphosphate dans la plage de pH requise, soit 4,5 et 6,2, plus particulièrement entre 5,0 et 6,0, de préférence supérieur à 5,5, mais inférieur ou égal à 5,8.

Par exemple, dans une variante, ladite série de cuves de solutions mère comprend une première cuve de solution mère, une deuxième cuve de solution mère, et une troisième cuve de solution mère, ledit moyen d'alimentation en fer et en au moins un polyphosphate étant relié à ladite troisième cuve, lesdits moyens d'ajustement 10 de pH étant reliés audit système de dilution ou à une des dites première ou deuxième cuves de solution mère.

Il est bien entendu que la présente invention n'est en aucune façon limitée aux formes de réalisations décrites ci-dessus et que bien des modifications peuvent y être apportées sans sortir du cadre des revendications annexées.

### Exemples.-

La mise en œuvre de compositions nutritives minérales à base de fer et d'au moins un polyphosphate a été testée dans différents procédés de fertirrigation dont les exemples les plus représentatifs de la présente invention et du problème qu'il a permis de résoudre sont repris ci-après.

### Mode opératoire des essais

La solution de fertirrigation est formée en continu dans un bac de dilution classique de 1000 litres que traverse l'eau d'irrigation. L'apport d'éléments nutritifs dans ledit bac de dilution s'effectue via trois solutions mères différentes, l'une d'elle renfermant la source de fer et de polyphosphate, les deux autres l'ensemble des éléments nutritifs restants.

### Exemple Comparatif 1.-

La solution mère contenant du fer et au moins un polyphosphate est celle de l'exemple 1 de la demande de brevet WO2014/056688. Cette solution, avec une teneur en Fe de 10 mmole / kg, se caractérise par un pH basique de 9,4 dans laquelle aucun précipité n'apparaît après 4 semaines de conservation à température ambiante ou température plus élevée (40°C).

Chacune des solutions mère est dosée à l'aide d'un système venturi spécifique, une petite fraction de la solution de fertirrigation étant prélevée au refoulement de la pompe d'irrigation pour servir de liquide d'entrainement à chaque venturi. Le pH de la solution de fertirrigation est par ailleurs ajusté de manière continue entre pH 5,4 et 5,7 par une addition automatique d'acide nitrique effectuée directement dans le bac de dilution. Un sévère problème de précipitation apparait à la sortie du venturi servant à doser la solution mère contenant du fer et au moins un polyphosphate après quelques heures de fonctionnement.

Les particules solides ainsi formées se déposent en partie sur les parois du tube et finissent par obturer entièrement le passage. En outre, le précipité d'orthophosphate de calcium solide à l'origine de cet encrassement entraine une fraction importante du fer par co-précipitation chimique. Ceci peut être la cause d'une grave carence en fer dans les plantes cultivées si la détection de l'anomalie n'est pas suffisamment rapide. D'après l'analyse de la solution de fertirrigation prélevée au goutte à goutte, la perte en fer résultante avant le blocage du venturi était déjà d'au moins 20% par rapport à la concentration théorique calculée en fer qui aurait dû être présente dans la solution de fertirrigation. Cette valeur théorique était correctement atteinte par une solution diluée préparée dans les mêmes proportions au laboratoire pour simuler le procédé.

### Exemple Comparatif 2.-

Une variante de l'Exemple Comparatif 1 a été réalisée en remplaçant le système venturi dédié à la solution mère contenant du fer et au moins un polyphosphate par une pompe de dosage volumétrique. Dans ce cas, ladite solution mère contenant du fer et au moins un polyphosphate aboutit donc directement dans le bac de dilution sans être partiellement diluée par la solution de fertirrigation dans le système de transfert. Lors de ce deuxième essai, le rendement en fer obtenu au goutte à goutte était particulièrement peu reproductible, des pertes de 40% étant observées par moment.

### Exemple Comparatif 3.-

Lors d'une seconde variante de l'Exemple Comparatif 1, la solution mère contenant du fer et au moins un polyphosphate est portée à pH 7,0 par addition d'acide nitrique avant sa mise en œuvre par le système de dosage venturi, les autres conditions opératoires étant identiques à celles de l'Exemple Comparatif1. Comme dans l'Exemple Comparatif 1, la stabilité de la solution mère est satisfaisante : aucun précipité n'étant observé après 4 semaines de conservation à température ambiante ou lors d'un stockage à une température de 40°C. Une telle acidification de la solution mère ne suffit cependant pas à empêcher le blocage du venturi au bout de quelques jours.

### Exemple Comparatif 4.-

Une variante de l'Exemple Comparatif 3 a été réalisée en augmentant le degré d'acidification de la solution mère contenant du fer et au moins un polyphosphate jusqu'à pH 4,0. Un précipité apparait alors dans ladite solution mère contenant du fer et au moins un polyphosphate au bout de quelques jours. Des analyses de la solution mère contenant du fer et au moins un polyphosphate filtrée ont permis de mesurer la proportion de fer restée en solution. Les résultats révèlent des pertes en fer importantes dans la solution mère contenant du fer et au moins un polyphosphate qui atteignaient respectivement 20 et 55% après 1 et 4 semaines de conservation à température ambiante.

### Exemple 1.-

Lors de cet essai, la solution mère contenant du fer et au moins un polyphosphate selon l'exemple 1 de la demande de brevet WO2014/056688 a été acidifiée à l'aide d'acide nitrique pour atteindre un pH de 6,0 avant sa mise en œuvre via un système de transfert de type venturi dans le bac de dilution. Les résultats ainsi obtenus sont satisfaisants à tous points de vue : le problème d'encrassement à la sortie du venturi a disparu et la teneur en fer soluble de la solution de fertirrigation prélevée au goutte à goutte est constamment égale à la valeur calculée aux erreurs d'analyse près. Enfin, la solution mère contenant du fer et au moins un polyphosphate est stable : aucune perte de fer par précipitation chimique sur 4 semaines de conservation à température ambiante ou à température de 40°C.

### Exemple 2.-

L'Exemple 1 a été reproduit en remplaçant le système de transfert de l'Exemple 1 par une pompe volumétrique. Le rendement en fer au niveau du goutte à goutte dépasse toujours largement 90%.

### Exemple 3

L'Exemple 1 a été reproduit en acidifiant de la solution mère contenant du fer et au moins un polyphosphate jusqu'à pH 5,0. La stabilité au stockage de la solution mère est maintenue jusqu'à 4 semaines à température ambiante.

## Revendications

1. Procédé de fertirrigation de végétaux comprenant
- une mise à disposition d'une série de solutions mère comprenant une solution mère comprenant du fer et au moins un polyphosphate, à pH basique ou à pH compris entre 4,5 et 6,2, avantageusement supérieur ou égal à 5,0 et inférieur ou égal à 6,0, de préférence un pH supérieur ou égal à 5,5, formée par addition de fer et d'au moins un polyphosphate à une phase aqueuse,
- une alimentation de chacune des solutions mère dans un système de dilution, pour former une solution de fertirrigation,
- une alimentation d'un dispositif de fertirrigation au moyen d'un dispositif de transfert, alimentant ledit dispositif de fertirrigation en ladite solution de fertirrigation,
avec la condition que si ladite solution mère est à pH basique, une quantité suffisante d'acide est ajoutée dans ledit système de dilution avant alimentation de ladite solution mère, et des conditions de mélange suffisamment intensives en un point d'alimentation de ladite solution mère dans ledit système de dilution sont assurées de manière à ce que ladite solution de fertirrigation possède un pH au-dessous de 6,2.

2. Procédé de fertirrigation de végétaux selon la revendication 1, dans lequel une de ladite au moins une solution de fer et d'au moins un polyphosphate à pH compris entre 4,5 et 6,2, avantageusement supérieur ou égal à 5,0 et inférieur ou égal à 6,0, de préférence un pH supérieur ou égal à 5,5 présente un pH compris entre 4,5 et 6,2, avantageusement supérieur ou égal à 5,0 et inférieur ou égal à 6,0, de préférence un pH supérieur ou égal à 5,5 et inférieur ou égal à 5,8 et est la solution de fertirrigation.

3. Procédé de fertirrigation de végétaux selon la revendication 1 ou la revendication 2, dans lequel ladite addition de fer et d'au moins un polyphosphate est mise en œuvre par alimentation séparément ou ensemble, d'une source de fer et d'une source d'au moins un polyphosphate, chaque source étant, indépendamment l'une de l'autre, sous forme de solide, de solution ou encore de suspension.

4. Procédé de fertirrigation de végétaux selon la revendication 1 ou encore la revendication 3 lorsqu'elle dépend de la revendication 1, dans lequel ladite au moins une addition de fer et d'au moins un polyphosphate à une phase aqueuse avec une formation d'au moins une solution de fer et d'au moins un polyphosphate à pH compris entre 4,5 et 6,2, avantageusement supérieur ou égal à 5,0 et inférieur ou égal à 6,0, de préférence un pH supérieur ou égal à 5,5 est une addition d'une pré-solution mère de fer et d'au moins un polyphosphate à une solution mère, laquelle forme la solution de fer et d'au moins un polyphosphate à un pH compris entre 4,5 et 6,2, avantageusement supérieur ou égal à 5,0 et inférieur ou égal à 6,0, de préférence un pH supérieur ou égal à 5,5.

5. Procédé de fertirrigation de végétaux selon la revendication 1 ou 4, ou encore la revendication 3 lorsqu'elle dépend de la revendication 1, dans lequel ladite au moins une solution de fer et d'au moins un polyphosphate à pH compris entre 4,5 et 6,2, avantageusement supérieur ou égal à 5,0 et inférieur ou égal à 6,0, de préférence un pH supérieur ou égal à 5,5 est une pré-solution mère de fer et d'au moins un polyphosphate à pH compris entre 4,5 et 6,2, avantageusement supérieur ou égal à 5,0 et inférieur ou égal à 6,0, de préférence un pH supérieur ou égal à 5,5 ajoutée à au moins une solution mère de ladite série de solutions mère

6. Procédé de fertirrigation de végétaux selon l'une quelconque des revendications 1 à 5, dans lequel ladite addition de fer et d'au moins un polyphosphate est mise en œuvre par alimentation d'une composition contenant du fer et au moins un polyphosphate, sous forme solide, de solution ou encore de suspension.

7. Procédé de fertirrigation selon l'une quelconque des revendications 1 à 6, dans lequel ladite au moins une solution mère de ladite série de solutions mère contenant le fer et au moins un polyphosphate contient également des ions choisis dans le groupe constitué des sulfates, des phosphates, des nitrates, des chlorures, du potassium, du sodium, de l'ammonium et de leurs mélanges.

8. Procédé de fertirrigation selon l'une quelconque des revendications 1 à 7 , dans lequel ladite au moins une solution mère de ladite série de solutions mère contenant le fer et au moins un polyphosphate ou la dite pré-solution mère contenant le fer et au moins un polyphosphate, contient des micronutriments sélectionnés dans le groupe constitué du bore, manganèse, du zinc, du cuivre, du molybdène, du cobalt et de leurs mélanges.

9. Procédé de fertirrigation de végétaux selon l'une quelconque des revendications 1 à 8, dans lequel le pH de ladite pré-solution mère ou d'une des dites solutions mère ou de la solution de fertirrigation est ajusté par addition d'un acide choisi dans le groupe constitué des acides minéraux, comme par exemple, l'acide nitrique, l'acide sulfurique, l'acide phosphorique et leurs mélanges.

10. Procédé de fertirrigation de végétaux selon l'une quelconque des revendications 1 à 9, comprenant en outre une oxydation de ladite solution mère contenant du fer et d'au moins un polyphosphate et/ou de ladite pré-solution mère contenant du fer et au moins un polyphosphate.

11. Procédé de fertirrigation de végétaux selon l'une quelconque des revendications 1 à 10, dans lequel le fer et ledit au moins un polyphosphate sont ajoutés selon un ratio P_{poly}/Fe compris entre 5 et 50, de préférence entre 8 et 32, où Fe représente le nombre de moles total de fer et où P_{poly} représente le nombre de moles de phosphore sous forme de polyphosphate.

12. Procédé de fertirrigation de végétaux selon l'une quelconque des revendications précédentes, dans lequel ledit au moins un polyphosphate comprend du tripolyphosphate de potassium, et/ou du tétrapotassium pyrophosphate, et/ou du potassium tripolyphosphate, et/ou du sodium tripolyphosphate, et/ou du pyrophosphate de sodium acide, et/ou du tétrasodium pyrophosphate et/ ou du pyrophosphate d'ammonium, et/ou du polyphosphate d'ammonium ou de leurs mélanges.

13. Procédé de fertirrigation de végétaux selon l'une quelconque des revendications précédentes, dans lequel le pH de la solution de fertirrigation est inférieur à 6,2.

14. Procédé de fertirrigation de végétaux selon l'une quelconque des revendications précédentes, dans lequel ladite solution de fertirrigation est à un pH inférieur à 6 et de préférence inférieur à 5,8.

15. Procédé de fertirrigation de végétaux selon l'une quelconque des revendications 3 et 6 à 14, lorsqu'elles dépendent de la revendication 2, dans lequel le fer et ledit au moins un polyphosphate sont ajoutés dans ladite solution de fertirrigation à un point d'alimentation présentant des conditions de mélange suffisamment intenses en vue d'éviter toute précipitation.

## Patentansprüche

1. Verfahren zur Düngungsbewässerung von Pflanzen, umfassend
- ein Bereitstellen einer Reihe von Stammlösungen, umfassend eine Stammlösung, umfassend Eisen und mindestens ein Polyphosphat, bei basischem pH-Wert oder bei einem pH-Wert im Bereich zwischen 4,5 und 6,2, vorteilhafterweise höher als oder gleich 5,0 und niedriger als oder gleich 6,0, vorzugsweise einem pH-Wert höher als oder gleich 5,5, gebildet durch Hinzufügen von Eisen und von mindestens einem Polyphosphat zu einer wässrigen Phase,
- eine Einspeisung jeder der Stammlösungen in ein Verdünnungssystem, um eine Düngungsbewässerungslösung zu bilden,
- eine Einspeisung einer Düngungsbewässerungsvorrichtung mittels einer Transfervorrichtung, die die Düngungsbewässerungsvorrichtung mit der Düngungsbewässerungslösung versorgt,
unter der Bedingung, dass, wenn die Stammlösung bei basischem pH-Wert vorliegt, vor der Einspeisung der Stammlösung eine ausreichende Menge an Säure in das Verdünnungssystem hinzugefügt wird, und ausreichend intensive Mischungsbedingungen an einem Einspeisungspunkt der Stammlösung in das Verdünnungssystem auf eine Weise gewährleistet sind, dass die Düngungsbewässerungslösung einen pH-Wert unterhalb von 6,2 besitzt.

2. Verfahren zur Düngungsbewässerung von Pflanzen nach Anspruch 1, wobei eine der mindestens einen Lösung von Eisen und von mindestens einem Polyphosphat bei einem pH-Wert im Bereich zwischen 4,5 und 6,2, vorteilhafterweise höher als oder gleich 5,0 und niedriger als oder gleich 6,0, vorzugsweise einem pH-Wert höher als oder gleich 5,5, einen pH-Wert im Bereich zwischen 4,5 und 6,2, vorteilhafterweise höher als oder gleich 5,0 und niedriger als oder gleich 6,0, vorzugsweise einen pH-Wert höher als oder gleich 5,5 und niedriger als oder gleich 5,8, aufweist und die Düngungsbewässerungslösung ist.

3. Verfahren zur Düngungsbewässerung von Pflanzen nach Anspruch 1 oder nach Anspruch 2, wobei das Hinzufügen von Eisen und von mindestens einem Polyphosphat durch Einspeisung, getrennt oder gemeinsam, einer Eisenquelle und einer Quelle von mindestens einem Polyphosphat durchgeführt wird, wobei jede Quelle unabhängig voneinander in Form von Feststoff, Lösung oder auch Suspension vorliegt.

4. Verfahren zur Düngungsbewässerung von Pflanzen nach Anspruch 1 oder auch Anspruch 3, wenn er von Anspruch 1 abhängt, wobei das mindestens eine Hinzufügen von Eisen und von mindestens einem Polyphosphat zu einer wässrigen Phase mit einer Bildung von mindestens einer Lösung von Eisen und von mindestens einem Polyphosphat bei einem pH-Wert im Bereich zwischen 4,5 und 6,2, vorteilhafterweise höher als oder gleich 5,0 und niedriger als oder gleich 6,0, vorzugsweise einem pH-Wert höher als oder gleich 5,5, ein Hinzufügen einer Vorstammlösung von Eisen und von mindestens einem Polyphosphat zu einer Stammlösung ist, welche die Lösung von Eisen und von mindestens einem Polyphosphat bei einem pH-Wert im Bereich zwischen 4,5 und 6,2, vorteilhafterweise höher als oder gleich 5,0 und niedriger als oder gleich 6,0, vorzugsweise einem pH-Wert höher als oder gleich 5,5, bildet.

5. Verfahren zur Düngungsbewässerung von Pflanzen nach Anspruch 1 oder 4, oder auch Anspruch 3, wenn er von Anspruch 1 abhängt, wobei die mindestens eine Lösung von Eisen und von mindestens einem Polyphosphat bei einem pH-Wert im Bereich zwischen 4,5 und 6,2, vorteilhafterweise höher als oder gleich 5,0 und niedriger als oder gleich 6,0, vorzugsweise einem pH-Wert höher als oder gleich 5,5, eine Vorstammlösung von Eisen und von mindestens einem Polyphosphat bei einem pH-Wert im Bereich zwischen 4,5 und 6,2, vorteilhafterweise höher als oder gleich 5,0 und niedriger als oder gleich 6,0, vorzugsweise einem pH-Wert höher als oder gleich 5,5, ist, hinzugefügt zu mindestens einer Stammlösung der Reihe von Stammlösungen.

6. Verfahren zur Düngungsbewässerung von Pflanzen nach einem der Ansprüche 1 bis 5, wobei das Hinzufügen von Eisen und von mindestens einem Polyphosphat durch Einspeisung einer Zusammensetzung, die Eisen und mindestens ein Polyphosphat in Form von Feststoff, Lösung oder auch Suspension enthält, durchgeführt wird.

7. Verfahren zur Düngungsbewässerung nach einem der Ansprüche 1 bis 6, wobei die mindestens eine Stammlösung der Reihe von Stammlösungen, die das Eisen und mindestens ein Polyphosphat enthalten, ebenfalls Ionen enthält, ausgewählt aus der Gruppe bestehend aus Sulfaten, Phosphaten, Nitraten, Chloriden, Kalium, Natrium, Ammonium und deren Gemischen.

8. Verfahren zur Düngungsbewässerung nach einem der Ansprüche 1 bis 7, wobei die mindestens eine Stammlösung der Reihe von Stammlösungen, die das Eisen enthalten, und mindestens ein Polyphosphat oder die Vorstammlösung, die das Eisen und mindestens ein Polyphosphat enthält, Mikronährstoffe enthält, ausgewählt aus der Gruppe bestehend aus Bor, Mangan, Zink, Kupfer, Molybdän, Kobalt und deren Gemischen.

9. Verfahren zur Düngungsbewässerung von Pflanzen nach einem der Ansprüche 1 bis 8, wobei der pH-Wert der Vorstammlösung oder einer der Stammlösungen oder der Düngungsbewässerungslösung durch Hinzufügen einer Säure eingestellt wird, ausgewählt aus der Gruppe bestehend aus Mineralsäuren wie zum Beispiel Salpetersäure, Schwefelsäure, Phosphorsäure und deren Gemischen.

10. Verfahren zur Düngungsbewässerung von Pflanzen nach einem der Ansprüche 1 bis 9, ferner umfassend eine Oxidation der Stammlösung, die Eisen und mindestens ein Polyphosphat enthält, und/oder der Vorstammlösung, die Eisen und mindestens ein Polyphosphat enthält.

11. Verfahren zur Düngungsbewässerung von Pflanzen nach einem der Ansprüche 1 bis 10, wobei das Eisen und das mindestens eine Polyphosphat gemäß einem Verhältnis P_{Poly}/Fe im Bereich zwischen 5 und 50, vorzugsweise zwischen 8 und 32, hinzugefügt werden, wobei Fe die Gesamtanzahl an Molen von Eisen darstellt und P_{Poly} die Anzahl an Molen von Phosphor in Form von Polyphosphat darstellt.

12. Verfahren zur Düngungsbewässerung von Pflanzen nach einem der vorstehenden Ansprüche, wobei das mindestens eine Polyphosphat Kaliumtripolyphosphat und/oder Tetrakaliumpyrophosphat und/oder Kaliumtripolyphosphat und/oder Natriumtripolyphosphat und/oder saures Natriumpyrophosphat und/oder Tetranatriumpyrophosphat und/oder Ammoniumpyrophosphat und/oder Ammoniumpolyphosphat oder deren Gemische umfasst.

13. Verfahren zur Düngungsbewässerung von Pflanzen nach einem der vorstehenden Ansprüche, wobei der pH-Wert der Düngungsbewässerungslösung niedriger als 6,2 ist.

14. Verfahren zur Düngungsbewässerung von Pflanzen nach einem der vorstehenden Ansprüche, wobei die Düngungsbewässerungslösung bei einem pH-Wert von niedriger als 6 und vorzugsweise niedriger als 5,8 liegt.

15. Verfahren zur Düngungsbewässerung von Pflanzen nach einem der Ansprüche 3 und 6 bis 14, wenn sie von Anspruch 2 abhängen, wobei das Eisen und das mindestens eine Polyphosphat an einem Einspeisungspunkt in die Lösung hinzugefügt werden, der hinsichtlich des Vermeidens jeder Ausfällung ausreichend intensive Mischungsbedingungen aufweist.

## Claims

1. A method for fertigation of plants comprising
- a provision of a series of stock solutions comprising a stock solution comprising iron and at least one polyphosphate, at basic pH or at pH between 4.5 and 6.2, advantageously greater than or equal to 5.0 and lower than or equal to 6.0, preferably a pH greater than or equal to 5.5, formed by adding iron and at least one polyphosphate to an aqueous phase,
- feeding each of the stock solutions into a diluting system to form a fertigation solution,
- feeding a fertigation device by means of a transfer device, supplying said fertigation device with said fertigation solution,
with the proviso that if said stock solution is at basic pH, a sufficient amount of acid is added to said diluting system prior to feeding said stock solution, and sufficiently intensive mixing conditions at a point of feeding said stock solution to said diluting system are provided so that said fertigation solution has a pH below 6.2.

2. The method for fertigation of plants according to claim 1, wherein one of said at least one iron solution and at least one polyphosphate at a pH between 4.5 and 6.2, advantageously greater than or equal to 5,0 and lower than or equal to 6.0, preferably a pH greater than or equal to 5.5 has a pH between 4.5 and 6.2, advantageously greater than or equal to 5.0 and lower than or equal to 6.0, preferably a pH greater than or equal to 5.5 and lower than or equal to 5.8 and is the fertigation solution.

3. The method for the fertigation of plants according to claim 1 or claim 2, wherein said addition of iron and at least one polyphosphate is carried out by feeding separately or together a source of iron and a source of at least one polyphosphate, each source being, independently of one another, in the form of a solid, a solution or a suspension.

4. The method for fertigation of plants according to claim 1 or claim 3 when it depends on claim 1, wherein at least one addition of iron and at least one polyphosphate to an aqueous phase with a formation of at least one iron solution and at least one polyphosphate at a pH of between 4.5 and 6.2, advantageously greater than or equal to 5.0 and lower than or equal to 6.0, preferably a pH greater than or equal to 5.5 is an addition of an iron stock pre-solution and at least one polyphosphate to a stock solution, which forms the iron solution and at least one polyphosphate at a pH between 4.5 and 6.2, advantageously greater than or equal to 5,0 and lower than or equal to 6.0, preferably a pH greater than or equal to 5.5.

5. The method for fertigation of plants according to claim 1 or 4, or claim 3 when it depends on claim 1, wherein said at least one iron solution and at least one polyphosphate at a pH of between 4.5 and 6.2, advantageously greater than or equal to 5.0 and lower than or equal to 6.0, preferably a pH greater than or equal to 5.5 is an iron stock pre-solution and at least one polyphosphate at a pH between 4.5 and 6.2, advantageously greater than or equal to 5.0 and lower than or equal to 6.0, preferably a pH greater than or equal to 5.5 added to at least one stock solution of said series of stock solutions.

6. The method for fertigation of plants according to any one of claims 1 to 5, wherein said addition of iron and at least one polyphosphate is carried out by feeding a composition containing iron and at least one polyphosphate, in solid, solution or suspension form.

7. The method for fertigation according to any one of claims 1 to 6, wherein said at least one stock solution of said series of stock solutions containing the iron and at least one polyphosphate also contains ions selected from the group consisting of sulfates, phosphates, nitrates, chlorides, potassium, sodium, ammonium and mixtures thereof.

8. The method for fertigation according to any one of claims 1 to 7, wherein said at least one stock solution of said series of stock solutions containing the iron and at least one polyphosphate or said stock pre-solution containing the iron and at least one polyphosphate, contains micronutrients selected from the group consisting of boron, manganese, zinc, copper, molybdenum, cobalt and mixtures thereof.

9. The method for fertigation of plants according to any one of claims 1 to 8, wherein the pH of said stock pre-solution or one of said stock solutions or fertigation solution is adjusted by adding an acid selected from the group consisting of mineral acids, such as for example nitric acid, sulfuric acid, phosphoric acid and mixtures thereof.

10. The method for fertigation of plants according to any one of claims 1 to 9, further comprising an oxidation of said stock solution containing the iron and at least one polyphosphate and/or of said stock pre-solution containing iron and at least one polyphosphate.

11. The method for fertigation of plants according to any one of claims 1 to 10, wherein iron and said at least one polyphosphate are added according to a ratio P_{poly}/Fe of between 5 and 50, preferably between 8 and 32, wherein Fe represents the total molar number of iron and wherein P_{poly} represents the molar number of phosphorus in the form of polyphosphate.

12. The method for fertigation of plants according to any one of the preceding claims, wherein said at least one polyphosphate comprises potassium tripolyphosphate, and/or tetrapotassium pyrophosphate, and/or potassium tripolyphosphate, and/or sodium tripolyphosphate, and/or sodium acid pyrophosphate, and/or tetrasodium pyrophosphate, and/or ammonium pyrophosphate, and/or ammonium polyphosphate or mixtures thereof.

13. The method for fertigation of plants according to any one of the preceding claims, wherein the pH of the fertigation solution is lower than 6.2.

14. The method for fertigation of plants according to any one of the preceding claims, wherein said fertigation solution is at a pH lower than 6 and preferably lower than 5.8.

15. The method for fertigation of plants according to any one of claims 3 and 6 to 14, when dependent on claim 2, wherein iron and said at least one polyphosphate are added to said fertigation solution at a feeding point having sufficiently intense mixing conditions to avoid any precipitation.
